# EUROPÄISCHE PATENTANMELDUNG

(11) **EP 0 573 842 A1**
(43) Veröffentlichungstag der Anmeldung: **15.12.1993**
(21) Anmeldenummer: 93108515.3
(22) Anmeldetag: 26.05.1993
(51) Int. Cl.: H01B 3/42, C09K 3/10

(54) **Kabelvergussmasse und Verfahren zu ihrer Herstellung**

(30) Priorität: 12.06.1992 DE 4219359
(71) Anmelder: PAUL JORDAN ELEKTROTECHNISCHE FABRIK, GmbH & Co., D-12249 Berlin (DE)
(72) Erfinder: Özsan, Murat, Dipl.-Phys., W-1000 Berlin 41 (DE); Krüger, Gert, Dipl.-Ing., W-1000 Berlin 49 (DE)
(74) Vertreter: Vogeser, Werner, Dipl.-Ing.

(57) **Zusammenfassung**

Die Erfidnung betrifft eine in Wärme und/oder Kälte vernetzbare Kabelvergußmasse aus zumindest einer Bindemittelkomponente und einer pulverförmigen Füllstoffkomponente, sowie ein Verfahren zu ihrer Herstellung, die sowohl in Wärme als auch in Kälte vernetzbar und im wesentlichen vor dem Vernetzen unbegrenzt lagerbar ist. Hierfür wird vorgeschlagen, daß die vernetzte Kabelvergußmasse das Reaktionsprodukt einer A-Komponente aus einer Erdalkaliverbindung als Füllstoff mit einem hydroxylterminierten Polybutadien als Bindemittel und einer B-Komponente aus einer Erdalkaliverbindung als Füllstoff mit einem mit Carboxylgruppen modifizierten Polybutadien als Bindemittel ist.

## Beschreibung

Die Erfindung betrifft in der Wärme und/oder Kälte vernetzbare Kabelvergußmassen gemäß dem Oberbegriff des Anspruchs 1 sowie ein verfahren zur Herstellung der Kabelvergußmassen gemäß dem Anspruch 9.

Bei unterirdisch verlegten Hausanschlüssen oder bei ungeschützt den Witterungseinflüssen ausgesetzten Kabelabzweigungen der Straßenbeleuchtung und ähnlichen Zwecken werden in der Regel Elektromuffen eingesetzt, d.h. Gehäuse aus widerstandsfähigen Materialien, in die Kabelstränge hineingeführt werden, um innerhalb der schützenden Gehäuse Kabelabzweigungen, Sicherungen oder dergleichen anzubringen. Dabei ist es unbedingt notwendig, daß die Klemmstellen innerhalb der Gehäuse zuverlässig vor schädlichen Umwelteinflüssen, also Feuchtigkeit, Korrosion etc., geschützt werden. Die kritischen Stellen sind dabei die Fugen zwischen den Muffenteilen einerseits und die Kabeleingänge andererseits und zwar nicht nur im Hinblick auf die Dichtigkeit gegenüber Umwelteinflüssen, sondern auch zur Aufrechterhaltung der Dichtigkeit von innen nach außen, wobei diese Muffen zum Schutz der Klemmstellen nach fertiger Montage mit zähflüssigen oder auch chemisch aushärtenden Substanzen bzw. Substanzgemischen ausgegossen werden.

Dabei ist es bekannt, daß nicht-aushärtende Vergußmassen aufgrund ihrer unterschiedlichen physikalischen Eigenschaften der in ihnen verwendeten Einzelkomponenten im Laufe der Zeit leichte Sedimentationserscheinungen zeigten, wobei der Füllstoffanteil der Masse sich absetzte und die Bindemittelkomponente freigesetzt wurde, wobei es zu Undichtigkeiten oder dergleichen kam.

Um diese vom Verbraucher für nachteilig erachteten Erscheinungen zu beseitigen, wurden der Füllstoff- und Bindemittelkomponente Vernetzungsmittel wie Amine oder Säuren als Katalysator zugegeben, wobei jedoch die Handhabung und somit die Umweltverträglichkeit des Produktes nicht mehr uneingeschränkt gegeben war.

Aus der EP-A-0 183 923 ist ein Verfahren zur Herstellung von Kabelvergußmassen bekannt, bei dem ein im wesentlichen aus einem Erdalkalicarbonat bestehender Füllstoff, eine Bindemittelkomponente und gegebenenfalls übliche Zusatzstoffe miteinander vermischt werden, wobei die Bindemittelkomponente aus einer Kombination von zwei unterschiedlichen Bindemitteln besteht.

Die DE-A-34 36 556 beschreibt in der Wärme vernetzbare Massen und Verfahren zur Herstellung von in der Kälte vernetzenden Massen, die aus einem Bindemittel und üblichen Zusatzstoffen bestehen, wobei das Bindemittel eine Kombination von zwei Bindemitteln ist, welche ohne Zusatz eines Vernetzungsmittels zur Vernetzung miteinander befähigt sind.

Die vorstehend beschriebenen Kabelvergußmassen zeichnen sich zwar durch eine gewisse leichte Verarbeitbarkeit aus, wobei jedoch die Lagerfähigkeit begrenzt ist.

Aufgabe der Erfindung ist es daher, eine Kabelvergußmasse sowie ein Verfahren zu ihrer Herstellung bereitzustellen, die sowohl in der Wärme als auch in der Kälte vernetzbar ist und die im wesentlichen unbegrenzt vor dem Vernetzen lagerbar ist.

Erfindungsgemäß wird diese Aufgabe durch die Merkmale der Ansprüche 1 und 9 gelöst. Bevorzugte Weiterbildungen der Erfindung sind den Unteransprüchen zu entnehmen.

Die erfindungsgemäße, in der Wärme und/oder Kälte vernetzbare Kabelvergußmasse ist dabei das Reaktionsprodukt einer A-Komponente aus einer Erdalkaliverbindung als Füllstoff mit einem hydroxylterminierten Polybutadien als Bindemittel und einer B-Komponente aus einer Erdalkaliverbindung als Füllstoff mit einem mit Carboxylgruppen modifizierten Polybutadien als Bindemittel. Aufgrund des Fehlens von Vernetzungsmitteln wie Katalysatoren, Aminen oder Säuren zeichnet sich die erfindungsgemäße Kabelvergußmasse durch eine hohe Umweltfreundlichkeit aus, da die vorstehend genannten Substanzen im wesentlichen von nicht-umweltbelastenden Eigenschaften sind. Weitere Vorteile der erfindungsgemäßen Kabelvergußmasse sind ihre leichte und gefahrlose Verarbeitung, ihre ausgezeichneten elektrischen Isolationseigenschaften wie hohe Durchschlagspannungswerte, ihr hydrophobes Verhalten und somit ihrer feuchtigkeitsabweisenden und damit korrosionsschützenden Wirkung. Überdies handelt es sich bei den erfindungsgemäß eingesetzten Komponenten um kostengünstige Komponenten und damit um Komponenten mit hoher Wirtschaftlichkeit. Neben den vorstehenden Eigenschaften zeichnet sich die erfindungsgemäße Kabelvergußmasse auch durch eine hohe Beständigkeit gegen Mikroben und Alterung aus und, da die Kabelvergußmasse keine umweltbelastenden Stoffe enthält, auch durch eine einfache Entsorgung.

Erfindungsgemäß hat es sich als vorteilhaft erwiesen, die A-Komponente und die B-Komponente in einem Gewichtsverhältnis von im wesentlichen 1:1 einzusetzen. Dies hat den Vorteil, daß wegen des im wesentlichen gleichen spezifischen Gewichts der Ausgangskomponenten der erfindungsgemäßen Kabelvergußmasse die Verarbeitbarkeit, insbesondere die vermischbarkeit, ohne komplizierte Wiege- und Meßeinrichtungen gewährleistet ist.

Als für die Zwecke der Erfindung geeignet hat es sich gezeigt, das Gewichtsverhältnis der Erdalkaliverbindung (E) zum hydroxylterminierten Polybutadien (HP) der A-Komponente so einzustellen, daß es der Formel I

E < HP (I)

genügt. Bei Einstellung der vorstehend genannten Mischung auf das genannte Gewichtsverhältnis zeigt das Gemisch eine sehr niedrige Viskosität und ausreichende Thixotropie, wobei nach dem Zusammenbringen der A-Komponente mit der B-Komponente innerhalb weniger Tage eine Vergußmasse mit reversibler Dehnbarkeit gebildet wird. Gemäß einer bevorzugten Ausführungsform der Erfindung wurde gefunden, daß zum Erreichen der gewünschten Eigenschaften der erfindungsgemäßen Kabelvergußmasse, wie hoher Durchschlagspannung und somit guter elektrischer Isoliereigenschaften, ausreichender Viskosität und hinreichender Aushärtzeit, das Gewichtsverhältnis des Füllstoffes zum hydroxylterminierten Polybutadien im wesentlichen im Bereich von 1:1,1 liegen sollte.

Zum Erreichen des beabsichtigten Zweckes, d.h. einer leichten Verarbeitbarkeit, einer hohen Lagerzeitstabilität oder dergleichen, ist erfindungsgemäß vorgesehen, daß in der B-Komponente das Gewichtsverhältnis der Erdalkaliverbindung (E) zum mit Carboxylgruppen modifizierten Polybutadien (CP) der Formel (II)

E < CP (II)

genügt. Bei Raumtemperatur wird dabei ebenfalls eine niedrigviskose und thixotrope Mischung erzielt, die ausgezeichnete Verarbeitungseigenschaften aufweist. Als für die Erfindung besonders geeignet gezeigt hat sich dabei, die Erdalkaliverbindung zum mit Carboxylgruppen modifizierten Polybutadien in einem Gewichtsverhältnis von im wesentlichen 1:1,1 einzusetzen. In Verbindung mit der A-Komponente, wie sie vorstehend beschrieben wird, ergeben sich gebrauchsfertige, blasenfreie Kabelvergußmassen, die den an sie gestellten Forderungen, wie leichte Verarbeitbarkeit, Nichtangreifbarkeit von Elektromuffen und Kabelummantelungen, inerte Reaktion gegenüber Metallen und Legierungen genügen sowie wegen des Fehlens umweltbelastender Stoffe von hoher Umweltfreundlichkeit sind.

Als für die Erfindung geeignete Füllstoffe haben sich im wesentlichen Oxide, Hydroxide, basische Carbonate und Carbonate der Erdalkalimetalle gezeigt, wobei mit Fettsäuren hydrophobiertes, gemahlenes und oberflächenbehandeltes Calciumcarbonat aus Umweltgründen bevorzugt wird. Als besonders geeignetes Calciumcarbonat hat sich handelsüblich erhältliches Calciumcarbonat mit einem Gehalt an ca. 98,5% Calciumcarbonat, ca. 0,4% Magnesiumcarbonat, ca. 0,1% Eisen(III)oxid und 1% unlöslicher HCl gezeigt. Dieses Calciumcarbonat wies im wesentlichen einen mittleren Teilchendurchmesser (nach Siebanalyse) von ca. 2 µm und eine Schüttdichte von 1,5 g/cm³ auf.

Die in der erfindungsgemäßen Kabelvergußmasse eingesetzten hydroxylterminierten Polybutadiene haben ein Molekulargewicht Mn in der Größenordnung von ca. 2600 bis 3200 und eine Iodzahl von ca. 400 bis ca. 600. Vorzugsweise hat das hydroxylterminierte Polybutadien ein Mn von ca. 2800 bis ca. 3000 und eine Iodzahl von ca. 450 bis 500. Im wesentlichen handelt es sich dabei um handelsüblich erhältliche hydroxylterminierte 1,4-cis-Polybutadiene mit einer nach DIN 53018 bei Raumtemperatur bestimmten Viskosität von ca. 10 Pa·s, die wegen ihrer ökologischen Unbedenklichkeit ohne besondere Vorkehrung eingesetzt werden können und den behördlichen Auflagen hinsichtlich einer Bodenbelastung ausreichend Genüge leisten.

Als das mit Carboxylgruppen modifizierte Polybutadien der B-Komponente werden vorzugsweise mit Carboxylgruppen modifizierte Polybutadiene eines Molekulargewichts Mn von ca. 1600 bis 1900 und einer Säurezahl von 0,3 bis 80 eingesetzt, insbesondere mit Maleinsäureanhydrid modifizierte Polybutadiene eines Molekulargewichts Mn von 1700 bis 1800. Handelsüblich erhältliche Polybutadiene mit einem Maleinsäureanhydridgehalt von ca. 7,5% und einer Säurezahl von ca. 70 (mg KOH/g) haben sich als für die Zwecke der Erfindung besonders geeignet gezeigt.

Auf die erfindungsgemäße Weise eingesetzte Kabelvergußmassen können bei Temperaturen zwischen ca. -10°C bis +50°C verarbeitet werden, wobei eine Aushärtung während ca. 3 bis 5 Tagen eintritt. Je nach Temperatur beträgt die nach DIN 53018 bestimmte Viskosität von 31 bis 38 Pa·s.

Gemäß dem erfindungsgemäßen Verfahren zur Herstellung einer vorgenannten Kabelvergußmasse werden zuerst eine aus einer Erdalkaliverbindung als Füllstoff mit einem hydroxylterminierten Polybutadien als Bindemittel enthaltende A-Komponente und eine eine Erdalkaliverbindung als Füllstoff und ein mit Carboxylgruppen modiziertes Polybutadien als Bindemittel enthaltende B-Komponente hergestellt, die A-Komponente und die B-Komponente zusammengebracht, wobei die erhaltene Mischung bei Temperaturen von -10°C bis +50°C vernetzt. Es hat sich dabei als vorteilhaft erwiesen, die vorstehend erwähnten Bestandteile der A-Komponente und B-Komponente in einen Schlauchbeutel gefüllt nacheinander getrennt durch eine Minischelle in einem Gewichtsverhältnis von 1:1 zusammenzubringen und die erhaltene Masse nach intensivem Kneten zu vergießen, wobei bereits 3 Tage nach dem Gießvorgang in Abhängigkeit von der Umgebungstemperatur eine elastische, homogene Masse entsteht. Für die Zwecke der Erfindung hat es sich als vorteilhaft erwiesen, vorstehend genannte Füllstoffe im Gewichtsverhältnis zu den vorstehend genannten Bindemitteln der A-Komponente sowie das Gewichtsverhältnis der vorstehend genannten Füllstoffe zum vorstehend genannten Bindemittel der B-Komponente in einem Gewichtsverhältnis von 1:1,1 einzustellen und die so hergestellten A- und B-Komponenten vor dem Verarbeiten in einem Gewichtsverhältnis von im wesentlichen 1:1 zusammenzubringen.

Nach Ausreagieren entsteht dabei ein gelartiges Produkt, das die vorstehend beschriebenen Eigenschaften aufweist und überdies blasenfrei ist.

Die Shore-Härte A des so erhaltenen Produktes liegt, je nach der Verarbeitungstemperatur, in einem Bereich von 8 bis 12.

Die Erfindung wird nachfolgend anhand eines Beispiels näher beschrieben.

100 g eines auf einen mittleren Teilchendurchmesser von ca. 2 µm und einer Schüttdichte von 1,5 g/cm³ gemahlenes, oberflächenbehandeltes und mit Fettsäuren hydrophobiertes Calciumcarbonat wird mit 110 g eines hydroxylterminierten Polybutadiens mit einem Molekulargewicht von 2800 g/mol und einer Iodzahl von 500 g/100 g vermischt.

Parallel dazu wurden 100 g des gleichen Füllstoffes mit 110 g eines durch Anlagerung von Maleinsäureanhydrid an ein Polymerisat von 1,3-Butadien erhaltenen Polybutadiens eines Molekulargewichts von ca. 1700 g/mol und einer Säurezahl von 75 mg KOH/g und einer nach DIN 53018 bei Raumtemperatur bestimmten Viskosität von 5 Pa·s bei Raumtemperatur mittels eines Chargenmischers nach einem laminaren Mischvorgang bei zum Beispiel 10 Upm vermischt, wobei jede der Komponenten A oder B für sich niedrigviskos und von thixotroper Eigenschaft blieb.

Nach Zusammenbringen der A- und B-Komponente in einem Gewichtsverhältnis von 1:1 wurde innerhalb weniger Tage eine bei -25 bis +50°C vernetzbare Kabelvergußmasse mit reversibler Dehnbarkeit, hoher elektrischer Durchschlagspannung, mittlerer Viskosität und Mikrobenresistenz erhalten.

Die A- sowie B-Komponente wurde nach ihrer Herstellung im Mischer auf ihr Fließverhalten, ihre Durchschlagspannung und ihre Dichte geprüft. Die gleichen Prüfmethoden wurden anschließend an der aus der vorstehend genannten Kombination hergestellten Kabelvergußmasse durchgeführt.

Die Dichtemessung erfolgte auf volumetrische Weise mittels einer Analysenwaage der Firma Sartorius nach Werksnorm.

Die Durchschlagspannung wurde mit einem Isolierprüfautomaten der Firma HCK nach VDE 0370 bestimmt.

Die Viskosität wurde sowohl rechnerisch als auch experimentell bestimmt, wobei als Modell zur Rechnung die Suspensionstheorie herangezogen wurde, da der Füllstoffanteil nicht aus kugelförmigen Partikeln besteht, sondern eher in Form eines Würfels vorliegt. Durch die Beschichtung der Würfeloberfläche zur Hydrophobierung und Verbesserung der Dispergierung erhält man dabei annähernd kugelsymmetrische Füllstoffpartikel, auf die die Suspensionstheorie anwendbar ist.

Zur Bestimmung der Viskosität wurde ein Rotationsviskosimeter der Firma Haake, Modell VT 500, mit einem Meßkopf SV2 nach DIN 53018 bei Raumtemperatur verwendet. Die tabellarisch festgehaltenen Zähigkeitswerte wurden bei einem Schergefälle von 12,31/s aufgenommen. Der nachfolgenden Tabelle I sind die Meßdaten sowohl der A-Komponente, der B-Komponente sowie einer Kabelvergußmasse im Gewichtsverhältnis von A-Komponente zu B-Komponente von 1:1 zu entnehmen:

**Tabelle I**

| | Komp. A | Komp. B | Vergußmasse | Meßmethode |
|---|---|---|---|---|
| Dichte (g/cm³) | 1,30 | 1,30 | 1,34 | volumetrisch |
| Durchschlagspannung U_{D} (kV/mm) | 13 | 16-23 | 12 | VDE 0370 |
| Viskosität (Pa·s) | 42(gem.) | 34(gem.) | 31-38 | DIN 53018 |
| | 40(ber.) | 25(ber.) | | |
| Shore-Härte A bei RT | --- | --- | 8-10 | DIN 53505 |
| Shore Härte A bei +50°C | --- | --- | 10 | " |
| Shore-Härte A bei -25°C | --- | --- | 10-12 | " |
| Aushärtezeit bei +20°C | --- | --- | 4-6 d | |
| Aushärtezeit bei +50°C | --- | --- | 1 d | |
| Aushärtezeit bei -25°C | --- | --- | ca.2 d mit klebriger Oberfläche | |

Die erfindungsgemäße Kabelvergußmasse eignet sich insbesondere als Füllmasse, die zum Füllen von Kabelzubehören und bei Kabelverbindungsmuffen bzw. Hausanschlußmuffen für erdverlegte Starkstromkabel mit Nennspannungen von 1 kV benötigt werden, zum Füllen der Innenräume von Zubehörteilen, von Anschlußmuffen, Spulenkästen und Endverschlüssen sowie zum Füllen des Raumes zwischen Innenmuffen und Schutzmuffen für Starkstromkabel mit Bleimetallmantel.

## Patentansprüche

1. In Wärme und/oder Kälte vernetzbare Kabelvergußmasse aus zumindest einer Bindemittelkomponente und einer pulverförmigen Füllstoffkomponente,
**dadurch gekennzeichnet,** daß
die vernetzte Kabelvergußmasse das Reaktionsprodukt einer A-Komponente aus einer Erdalkaliverbindung als Füllstoff mit einem hydroxylterminierten Polybutadien als Bindemittel und einer B-Komponente aus einer Erdalkaliverbindung als Füllstoff mit einem mit Carboxylgruppen modifizierten Polybutadien als Bindemittel ist.

2. Kabelvergußmasse nach Anspruch 1,
**dadurch gekennzeichnet,** daß
das Gewichtsverhältnis der A-Komponente zur B-Komponente im wesentlichen 1:1 ist.

3. Kabelvergußmasse nach Anspruch 1 oder 2
**dadurch gekennzeichnet,** daß
das Gewichtsverhältnis der Erdalkaliverbindung (E) zum hydroxylterminierten Polybutadien (HP) der A-Komponente der folgenden Formel I
E < HP (I)
genügt.

4. Kabelvergußmasse nach Anspruch 1 oder 2,
**dadurch gekennzeichnet,** daß
das Gewichtsverhältnis der Erdalkaliverbindung (E) zum mit Carboxylgruppen modifizierten Polybutadien (CP) der B-Komponente der folgenden Formel II
E < CP (II)
genügte.

5. Kabelvergußmasse nach einem der Ansprüche 1 bis 4,
**dadurch gekennzeichnet,** daß
die Erdalkaliverbindung ein mit Fettsäuren hydrophobiertes Calciumcarbonat ist.

6. Kabelvergußmasse nach einem der Ansprüche 1 bis 5,
**dadurch gekennzeichnet,** daß
das hydroxylterminierte Polybutadien ein Molekulargewicht Mn von 2600 bis 3200 und eine Iodzahl von 400 bis 600 hat.

7. Kabelvergußmasse nach einem der Ansprüche 1 bis 5,
**dadurch gekennzeichnet,** daß
das mit Carboxylgruppen modifizierte Polybutadien ein Molekulargewicht Mn von 1600 bis 1900 und eine Säurezahl von 0,3 bis 80 hat.

8. Kabelvergußmasse nach Anspruch 7,
**dadurch gekennzeichnet,** daß
das mit Carboxylgruppen modifizierte Polybutadien ein mit Maleinsäureanhydrid modifiziertes Polybutadien ist.

9. Herstellung einer Kabelvergußmasse nach einem der Ansprüche 1 bis 8,
**dadurch gekennzeichnet,** daß
a) die A-Komponente und die B-Komponente in zwei separaten Behältern bei Raumtemperatur hergestellt und
b) die A-Komponente und die B-Komponente bei Umgebungstemperatur zusammengebracht werden, wobei die erhaltene Mischung vernetzt.

10. Verfahren nach Anspruch 9,
**dadurch gekennzeichnet,** daß
die Gewichtsverhältnisse des Füllstoffs zum Bindemittel der A-Komponente und/oder der B-Komponente im wesentlichen auf einen Wert von 1:1,1 eingestellt und die so hergestellten A- und B-Komponenten vor dem Verarbeiten in einem Gewichtsverhältnis von im wesentlichen 1:1 zusammengebracht werden.
